Europäisches Patentamt

European Patent Office

Office européen des brevets

(11) Publication number: **0 361 381**
**A2**

## EUROPEAN PATENT APPLICATION

(21) Application number: 89117734.7

(51) Int. Cl.⁵: **G11B 5/55**

(22) Date of filing: 26.09.89

(30) Priority: 27.09.88 JP 242798/88

(43) Date of publication of application:
**04.04.90 Bulletin 90/14**

(84) Designated Contracting States:
**DE FR GB**

(71) Applicant: **NEC CORPORATION**
**33-1, Shiba 5-chome**
**Minato-ku Tokyo(JP)**

(72) Inventor: **Nagasawa, Makoto c/o NEC Ibaraki,**
**Ltd.**
**367-2, Aza Ohcha Sekitate Sekijou-machi**
**Makabe-gun Ibaraki(JP)**

(74) Representative: **Vossius & Partner**
**Siebertstrasse 4 P.O. Box 86 07 67**
**D-8000 München 86(DE)**

(54) **Actuator velocity control system for moving a magnetic head in a magnetic disk unit and a magnetic disk unit with said system.**

(57) An actuator velocity control system of actuator driving mechanism for magnetic head of magnetic disk unit, wherein the actuator velocity of actuator is controlled by a desired velocity output means which outputs the desired velocity in such a manner that the values of changes in acceleration in acceleration process of the actuator mechanism and at a transition of from the acceleration process to the constant velocity process thereof are not more than the maximum of changes in negative acceleration in deceleration process of the actuator and a magnetic disk unit for materializing said system which comprises said desired velocity output means.

FIG. 1

EP 0 361 381 A2

# ACTUATOR VELOCITY CONTROL SYSTEM FOR MOVING A MAGNETIC HEAD IN A MAGNETIC DISK UNIT AND A MAGNETIC DISK UNIT WITH SAID SYSTEM

The present invention relates to a magnetic disk unit, and particularly relates to an actuator velocity control system for moving a magnetic head in a magnetic disk unit.

Conventionally, in such a magnetic disk unit, an actuator velocity control system for moving a magnetic head is applied wherein the actuator driving mechanism has one output form of desired velocity of actuator, and the desired velocity is outputted only in the one output form in compliance with the remaining seek length to the actuator driving mechanism, and wherein in acceleration process the actuator mechanism is accelerated to full extent till the velocity of the actuator reaches the desired velocity wheras on turning from the acceleration process to the constant velocity process, acceleration is abruptly stopped. (see The IBM 3370 Head-Positioning Control System, IBM Disk Storage Technology, February 1980, page 41 and Actuator for an Eight-Inch Disk File, IBM Disk Storage Technology, February 1980, pages 84-85).

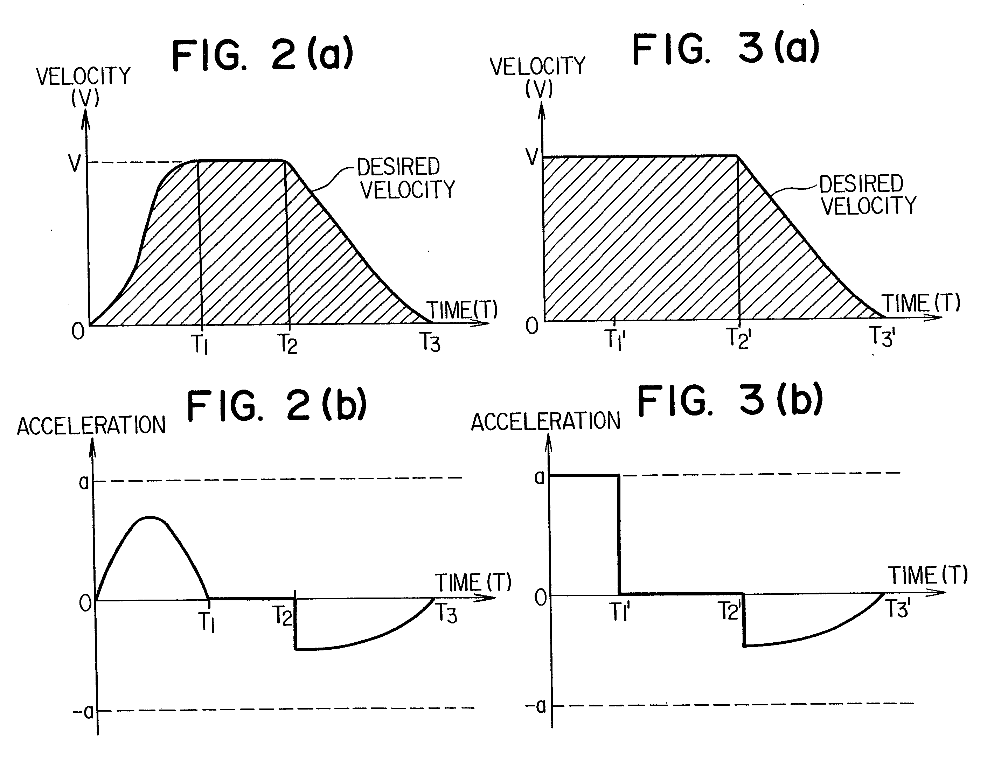

Figs. 3 (a) and (b) show desired velocity versus time curve and acceleration versus time curve of the actuator mechanism in the conventional unit, respectively.

In the conventional magnetic disk unit, when seek is carried out relative to seek cylinder length, since the desired velocity is at the maximal velocity V from the beginning of seek, acceleration is maximized with a view to complying with the desired velocity, for the period of from time 0 to $T_1$.

In the above-mentioned conventional magnetic disk unit, acceleration is sharply changed at both the beginning of seek and the completion thereof, since in an actuator velocity control system for moving a magnetic head, in acceleration process of the actuator driving mechanism, acceleration is maximized from the start, whereas on turning from the accelerating process to the constant-velocity process, acceleration is abruptly stopped. This sharp change of acceleration produces vibration in the acutuator driving mechanism. Therefore, there are disadvantages that loud sound of vibration is caused and that a settling time for positioning a magnetic head to the target cylinder becomes longer.

An object of the present invention is to provide actuator velocity control system for moving a magnetic head in a magnetic disk unit wherein the occurrence of vibration in the actuator driving mechanism is removed by outputting the desired velocity from a desired velocity output means to the actuator driving mechanism so that sharp change of acceleration does not occur in acceleration process of the actuator driving mechanism and at a transition of from the acceleration process to the constant velocity process thereof by which the ocurrence of vibration sound can be removed as well as a settling time for positioning a magnetic head to the target cylinder can be shortened, and another object thereof is to provide a magnetic disk unit for materializing said system.

The object of the present invention concerned with the actuator velocity control system is achieved by an actuator velocity control system of actuator driving mechanism for a magnetic head of magnetic disk unit, comprising outputting the desired velocity of actuator from a desired velocity output means to actuator driving mechanism for moving the magnetic head under the actuator velocity control in compliance with the desired velocity so that the values of changes in acceleration in acceleration process of the actuator driving mechanism and at a transition of from the acceleration process to the constant velocity process thereof are not more than the maximum of changes in nagative acceleration in deceleration of the actuator.

Next, the object of the present invention concerned with the magnetic disk unit is achieved by a magnetic disk unit in which closed loop of actuator velocity control in compliance with the desired velocity of actuator in driving actuator driving mechanism for moving a magnetic head is constructed, comprising a desired velocity output means for outputting the desired velocity to the actuator driving mechanism so that the values of changes in acceleration in acceleration process of the actuator driving mechanism and at a transition of from the acceleration process to the constant velocity process thereof are not more than the maximum of changes in acceleration in deceleration process of the actuator driving mechanism.

In the above-mentioned actuator velocity control system and magnetic disk unit, the desired velocity is outputted from the desired velocity output means to the actuator driving mechanism in such a manner that velocity versus time curve in acceleration process of the actuator driving mechanism approximates sine (SIN) curve.

Further, in the above-mentioned magnetic disk unit, the desired velocity of one selected from output forms in compliance with a seek length is outputted to the actuator driving mechanism.

Furthermore, in the above-mentioned magnetic disk unit, the desired velocity may be outputted not depending on a distance between the current cylinder and the target cylinder, but every constant period in acceleration process and at a transition of from the acceleration process to the constant velocity process.

Further, in the above-mentioned magnetic disk unit, to make an actuator velocity follow-up the desired velocity is achieved by a magnetic disk unit comprising a magnetic disk turned on a spindle, a magnetic head for writing/reading which approaches a surface of the magnetic disk in writing/reading, an actuator driving mechanism for moving the magnetic head to the target cylinder position, a position control circuit for driving the actuator driving mechanism, a read/write circuit, an interface circuit through which said magnetic disk unit is interfaced with a host control unit, wherein said magnetic disk unit comprises a target cylinder position register means for storing seek command information from the host control unit as target cylinder position, a cylinder counter means for storing the current position of the magnetic head, a computing means for computing successively remaining seek lengths from values outputted from the target cylinder position register means and values outputted from the cylinder counter means, a desired velocity output means for outputting the desired velocity in compliance with remaining seek length, a velocity servo circuit means for making an actuator velocity follow-up the desired velocity, and a microprocessor means for controlling the above-mentioned means.

With the actuator velocity control system and the magnetic disk unit according to the present invention, a vibrational sound at no time occur and a settling time for positioning a magnetic head to the target cylinder can be shortened, since the occurrence of vibration is removed by outputting the desired velocity from the desired velocity output means so that sharp change in acceleration does not occur in acceleration process of the actuator driving mechanism and at a transition of from the acceleration process to the constant velocity process thereof.

Further, the above-mentioned unit has the same circuit as the conventional magnetic disk unit except that the above-mentioned unit comprise the above-mentioned desired velocity outputting means. Therefore it is not necessary to make a big change to circuit.

Fig. 1 is a block diagram of one embodiment of the present invention;

Fig. 2 (a) is a diagram showing a curve of the desired velocity versus time on the actuator driving mechanism of this embodiment;

Fig. 2 (b) is a diagram showing a curve of acceleration versus time on the actuator driving mechanism of same embodiment;

Fig. 3 (a) is a diagram showing a curve of the desired velocity versus time on the actuator driving mechanism of a conventional magnetic disk unit; and

Fig. 3 (b) is a diagram showing a curve of acceleration versus time on the actuator driving mechanism of a conventional magnetic disk unit.

The present invention is now explained with reference to the drawings.

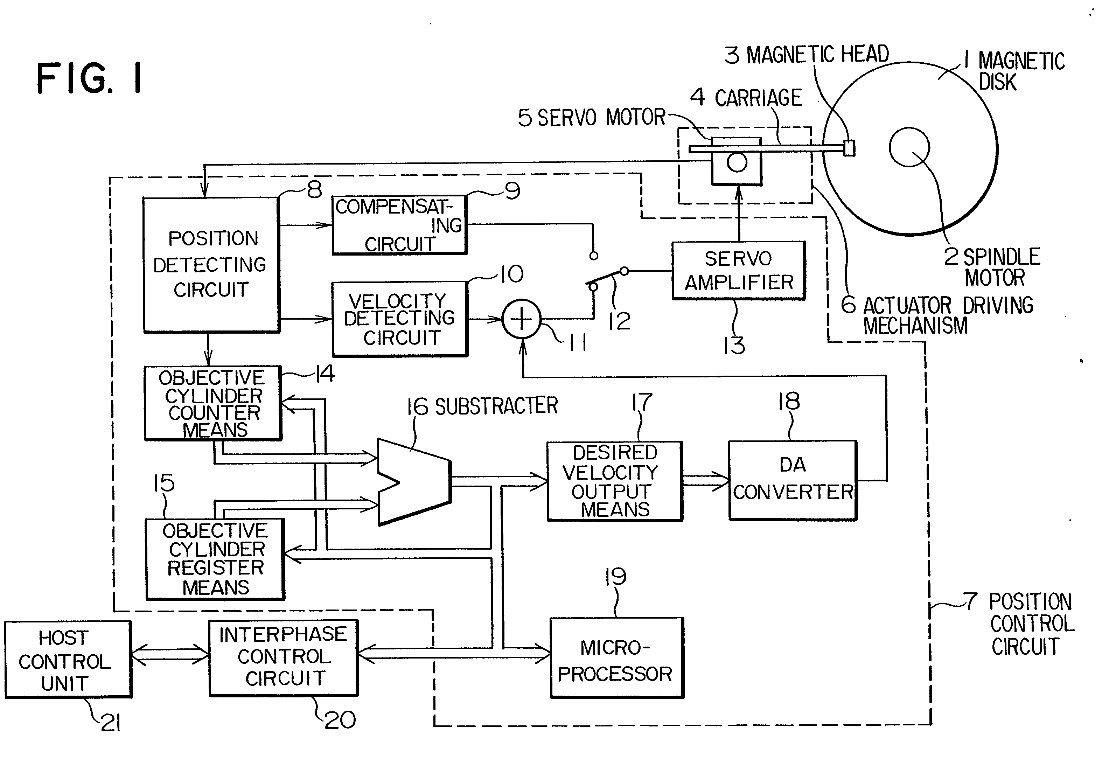

Fig. 1 shows a block diagram of one embodiment of the present invention.

Figs. 2 (a) and (b) are diagrams showing a curve of the desired velocity versus time and a curve of acceleration versus time on the actuator driving mechanism of this example, respectively.

First, with reference to Fig. 1, a magnetic disk 1 is mounted on a spindle motor 2 and rotated by means of the spindle motor 2. The magnetic head 3 is opposed to a data recording surface of the magnetic disk 1. A magnetic head 3 is attached to a carriage 4, and moved in a radial direction with floating above the data recording surface of the magnetic disk 1, by means of DC servo motor 5. An actuator mechanism is comprised of the magnetic head 3, the carriage 4 and the DC servo motor 5. The actuator driving mechanism 6 is driven with a positioning control circuit 7. The DC servo motor 5 has a rotary encoder, which outputs two-phase analog position signal to a position detecting circuit 8 of the position control circuit 7 which is connected to the DC servo motor 5.

The position control circuit 7 comprises the position detecting means 8, a compensating circuit 9, a velocity detecting means 10, a current cylinder counter means 14, a target cylinder register means 15, a subtracter 16, a desired velocity output means 17, a D A converter (digital-analog-converter) 18, microprocessor 19, an error detecting circuit 11, a circuit changing switch means 12, and a servo amplifier 13. The position detecting circuit 8 is connected to the compensating circuit 9, the velocity detecting circuit 10, and the current cylinder counter means 14. The current cylinder counter means 14 and the target cylinder register means 15 are connected to the subtracter 16. The subtracter 16 is connected to the desired velocity output means 17, which is connected to the D/A converter 18. The microprocessor 19 is connected to the current cylinder counter means 14, the target cylinder register means 15, the desired velocity output means 17, and an interface control circuit 20 outside the positioning control circuit 7, through data bus respectively. The interface control circuit 20 is connected with a host control unit 21, through data bus. The velocity detecting circuit 10 and the D/A converter 18 are connected to the error detecting circuit 11. The compensating circuit 9 is connected to one contact of the circuit changing switch means 12, while the detecting circuit 11 is connected to another contact of the circuit changing switch means 12. The circuit changing switch means 12 is connected to the servo amplifier 13, which is connected to the DC servo motor 5.

The position control circuit 7 has two operation modes of a positioning mode and a seek mode, in which either the positioning mode or the seek mode is selected with the circuit changing switch means 12.

In case of the positioning mode, one phase of analog position signal outputted from the rotary encoder is transmitted to the servo amplifier 13 through the compensating circuit 9, and the circuit changing switch means 12. The servo amplifier 13 drives the DC servo motor 5. The motion of the motor is fed back to the position detecting circuit 8 with the rotary encorder, thus positioning servo loop is constructed.

In case of the seek mode, an measured velocity signal is outputted from the velocity detecting circuit 10 while a desired velocity signal is outputted from the D/A converter 18. The measured velocity is subtracted from the desired velocity to form the velocity error at the error detecting circuit 11. The velocity error signal is sent to the servo amplifier 13 through the circuit changing switch means 12, thus a velocity servo loop for controlling the velocity of the servo motor 5 in compliance with the desired velocity to keep the velocity of the servo motor 5 close to the desired velocity is constructed.

In a seeking stage, the cylinder counter means 14 accepts the information on a seek direction from the microprocessor 19, counts the cylinder crossing pulse generated at the position detecting circuit 8 and stores always the current cylinder position of the magnetic head 3. The target register means 15 stores the information on seek instruction as the seek target cylinder value inputted from the host control unit 21 through the interface circuit 20. The subtracter 16 computes the absolute value of the difference between the seek target cylinder value and the current cylinder position and polarity. The polarity represents a seek direction of the magnetic head 5. The absolute value of the difference represents the remaining seek length. The desired velocity output means 17 outputs the desired velocity set according to the remaining seek length outputted from the subtracter 16 to the DA converter 18 so that sharp changes of acceleration does not occur in acceleration process of the actuator mechanism and at a transition of from the acceleration process to the constant velocity period.

Figs. 2 (a), (b) show a curve of the desired velocity versus time and a curve of acceleration versus time of the actuator driving mechanism of this embodiment.

This figure shows a case in which the desired velocity calculated from the following expression:

$$v = \frac{V}{2} \{ 1 + SIN ( \frac{t}{T_1} \ \pi + \frac{\pi}{2} )\}$$

wherein $v$ is the desired velocity, $t$ is a move time, $V$ is a constant velocity, and $T_1$ is a time when the desired velocity reaches the constant velocity, and $(0 < t < T_1)$, and which change depending on time approximates to a sine (SIN) curve is outputted from the desired velocity output means during acceleration. In case of carrying out seek for seek cylinder length, the desired velocity is outputted from the desired velocity output means to the actuator driving mechanism in such a manner that the velocity is increased from time 0 to under $T_1$ , is constant between times $T_1$ and $T_2$, and decreased over time $T_2$ and until $T_3$. Hereupon, value obtained by integrating the desired velocity with time, that is the area shown with the hatched portion equals to seek cylinder length. Change of acceleration in this case is shown in Fig. 2 (b).

Since acceleration is obtained by differenciating velocity with time, the acceleration approximates to:

$$COS ( \frac{t}{T_1} \ \pi + \frac{\pi}{2} )$$

$(0 < t < T_1)$,
thus sharp changes of acceleration at no time occur.

## Claims

1. An actuator velocity control system of actuator driving mechanism for a magnetic head of magnetic disk unit, comprising outputting the desired velocity of an actuator from a desired velocity output means to an actuator driving mechanism for moving the magnetic head under the actuator velocity control in compliance with the desired velocity so that the values of changes in acceleration in acceleration process of the actuator driving mechanism and at a transition of from the acceleration process to the constant-velocity process thereof are not more than the maximum of changes in negative acceleration in deceleration of the actuator mechanism.

2. An actuator control system as claimed in claim 1, wherein the desired velocity is outputted from the desired velocity output means to the actuator driving mechanism in such a manner that velocity versus time curve in acceleration process of the actuator driving mechanism approximates sine curve.

3. A magnetic disk unit with a closed loop of actuator velocity control in compliance with the desired velocity of actuator in driving actuator driving mechanism for moving a magnetic head, comprising a desired velocity output means for outputting the desired velocity to the actuator driving mechanism so that the values of changes in acceleration in acceleration process of the actuator driving mechanism and at a transition of from the acceleration process to the constant velocity process thereof are not more than the maximum of changes in negative acceleration in deceleration of the actuator driving mechanism.

4. A magnetic disk unit as claimed in claim 3, wherein the desired velocity output means is a means for outputting the desired velocity to the actuator driving mechanism so that the velocity versus time curve in acceleration process of the actuator driving mechanism approximates a sine curve.

5. A magnetic disk unit as claimed in claim 3, wherein the desired velocity output means is a means for outputting the desired velocity of one selected from output forms in compliance with a seek length to the actuator driving mechanism.

6. A magnetic disk unit as claimed in claim 3 or 4, wherein the desired velocity output means is a means for outputting the desired velocity not depending on a distance between the current cylinder and the target cylinder but every constant period in the acceleration process and at the transition of from the acceleration process to the constant velocity process.

7. A magnetic disk unit comprising a magnetic disk turned on a spindle, a magnetic head for writing/reading which approaches a surface of the magnetic disk in writing/reading, an actuator driving mechanism for moving the magnetic head to the target cylinder position, a position control circuit for driving the actuator driving mechanism, a read/write circuit, an interface circuit through which said magnetic disk unit is interfaced with a host control unit, wherein said magnetic disk unit comprises a target cylinder position register means for storing seek command information from the host control unit as target cylinder position, a cylinder counter means for storing the current position of the magnetic head, a computing means for computing successively remaining seek lengths from values outputted from the target cylinder position register means and values outputted from the current cylinder counter means, a desired velocity output means for outputting the desired velocity in compliance with remaining seek length, a velocity servo circuit means for making an actuator velocity follow-up the desired velocity, and a microprocessor means for controlling the above-mentioned member.

# FIG. 1

EP 0 361 381 A2

# FIG. 2 (a)

VELOCITY
(V)

V

DESIRED
VELOCITY

O    T₁    T₂    T₃    TIME (T)

# FIG. 3 (a)

VELOCITY
(V)

V

DESIRED
VELOCITY

O    T₁'    T₂'    T₃'    TIME (T)

# FIG. 2 (b)

ACCELERATION

a

O    T₁    T₂    T₃    TIME (T)

-a

# FIG. 3 (b)

ACCELERATION

a

O    T₁'    T₂'    T₃'    TIME (T)

-a

EP 0 361 381 A2